# FASCICULE DE BREVET EUROPEEN

(11) **EP 2 566 077 B1**
(45) Date de publication et mention de la délivrance du brevet: **21.03.2018**
(21) Numéro de dépôt: 12182456.9
(22) Date de dépôt: 30.08.2012
(51) Int. Cl.: H04J 3/06

(54) **Système de communications permettant la transmission de signaux entre des équipements terminaux raccordés à des équipements intermédiaires reliés à un réseau Ethernet.**
Kommunikationssystem zur Übertragung von Signalen zwischen Endgeräten, die an Zwischengeräte angeschlossen sind, die mit einem Ethernetnetz verbunden sind
Communication system for transmitting signals between terminal devices coupled with intermediate devices connected to an Ethernet network

(30) Priorité: 02.09.2011 FR 1102674
(43) Date de publication de la demande: 06.03.2013
(73) Titulaire: Thales, 92200 Neuilly Sur Seine (FR)
(72) Inventeur: Renaux, Michel, 92622 GENNEVILLIERS CEDEX (FR); Oustric, Michel, 92622 GENNEVILLIERS CEDEX (FR)
(74) Mandataire: Lavoix

(56) Documents cités:
- US-B1- 6 757 303
- US-B1- 7 599 283
- TILAK R ET AL: "Layered interactive convergence for distributed clock synchronization", MICROPROCESSORS AND MICROSYSTEMS, IPC BUSINESS PRESS LTD. LONDON, GB, vol. 26, no. 9-10, 20 décembre 2002 (2002-12-20), pages 407-420, XP004403397, ISSN: 0141-9331, DOI: 10.1016/S0141-9331(02)00066-2

## Description

La présente invention concerne un système de communications permettant la transmission de signaux, notamment des signaux transportant des flux continus de données, entre des équipements terminaux raccordés à des équipements intermédiaires reliés à un réseau de communications utilisant le protocole Ethernet, et un dispositif de type équipement intermédiaire associé.

Plus particulièrement, l'invention se situe dans le domaine de la transmission de signaux demandant une transmission synchrone, comme par exemple des signaux provenant de liaisons série synchrone ou de connexions analogiques à forte contrainte d'intégrité, sur des réseaux locaux LAN (« local area network ») ou MAN (« Metropolitan Area Network ») notamment.

Dans les dernières années, les réseaux locaux de type Ethernet, à commutation de paquets asynchrone, ont pris le pas sur d'autres types d'architecture réseau basées sur des technologies synchrones telles que le multiplexage temporel « Time Division Multiplexing ».

Néanmoins, pour certaines applications, telles que par exemple des applications de déport numérique de voix ou de données dans le domaine militaire, les liaisons entre divers équipements doivent être synchrones. De plus il peut être nécessaire d'assurer une synchronisation commune entre plus de deux accès, de même qu'une modification dynamique du matriçage de certaines connexions sans perturbation des autres connexions.

Il existe donc un besoin de transmission synchrone de données, même sur un support de type réseau local à commutation de paquets de type Ethernet.

Des solutions pour répondre à ce besoin ont été proposées dans l'état de la technique.

D'une part, on connaît ce qu'on appelle les méthodes adaptatives, dans lesquelles chaque équipement connecté au réseau maintient des mémoires tampon qui se remplissent avec le flux de données reçu et se vident au rythme du traitement de ces données. La resynchronisation des données se fait à partir des données stockées dans les mémoires tampon initialisées au début du processus à un seuil de remplissage. Ce type de solution présente notamment l'inconvénient de la difficulté du dimensionnement des mémoires tampon, pour éviter de perdre des données en cas de surcharge ou de famine. De plus, le traitement des données à partir des mémoires tampon génère des retards. Cette solution est compliquée, en particulier pour des réseaux mettant en oeuvre des liaisons multipoints, et qui ne se limitent donc pas à des liaisons point-à-point.

D'autre part, il a également été proposé une technologie de synchronisation pour Ethernet, connue sous le nom de SyncE. La solution SyncE utilise un signal d'horloge qui est codé directement sur la ligne de communication. Par ailleurs, un réseau Ethernet comprend classiquement des commutateurs qui permettent de relier des équipements terminaux ou intermédiaires entre eux, via des liaisons point à point (« unicast ») ou des liaisons point vers multipoint (« broadcast » ou « multicast »). Par conséquent, des commutateurs spécifiques sont impérativement nécessaires pour assurer la propagation des informations d'horloge.

Enfin, dans le domaine des réseaux informatiques, on connaît le protocole « Network Time Protocol » (NTP) qui permet de synchroniser les horloges de différents ordinateurs connectés à un réseau sur une horloge de référence. Les messages NTP sont transmis au niveau de la couche applicative, du modèle OSI (« Open Systems Interconnection »), et sont traités au niveau logiciel. La latence de transport et de traitement n'est pas adaptée à des systèmes qui nécessitent une synchronisation présentant une gigue inférieure à 50 nanosecondes (ns).

Le document « Layered interactive convergence for distributed clock synchronization » de R. Tilak et al, publié dans Microprocessors and Microsystems, vol. 26, décembre 2002, pages 407-420, décrit un service de synchronisation maître-esclave où le processus serveur diffuse périodiquement un message de synchronisation contenant un horodatage basé sur son horloge locale, et où les processus clients, sur réception du message, ajustent leur horloge sur l'horloge du maître en utilisant l'horodatage contenu dans le message maître.

Le brevet US6757303 B1 décrit un système de synchronisation temporelle destiné à des instruments de musique électronique aptes à communiquer selon le standard MIDI.

Afin de pallier certains inconvénients de l'état de la technique, l'invention propose un système de communications tel que revendiqué dans la revendication 1.

Avantageusement, une information de référence temporelle provenant du générateur d'horloge de référence est transportée sous forme de paquets de transport de données à travers le réseau, et chaque équipement intermédiaire se synchronise grâce à cette information de référence temporelle qui est émise périodiquement. Cette solution permet une synchronisation de tous les équipements intermédiaires sur une même référence, quelque soit le type de liaison, point-à-point ou point-multipoint ou multipoint-point ou multipoint-multipoint. L'acquisition de la synchronisation ne nécessite pas de flux de données utilisateur, par conséquent : les connexions s'établissent dans un réseau déjà synchronisé et donc plus rapidement ; la modification du matriçage de connexions n'a pas d'impact sur la synchronisation et donc sur les autres connexions.

L'asservissement du générateur d'horloge local permet ensuite de synchroniser tous les moyens de traitement, sans nécessiter de stockage de données dans des mémoires tampon. Le système proposé permet d'utiliser des générateurs d'horloge, y compris le générateur d'horloge de référence qui sont des produits sur étagère, ou COTS (« commercial of the shelf » en terminologie anglo-saxonne), et donc présente un atout économique.

Le système de communications selon l'invention peut également présenter une ou plusieurs des caractéristiques revendiquées dans les revendications dépendantes 2 à 12.

Selon un autre aspect, l'invention concerne un dispositif de type équipement intermédiaire selon les revendications 13 et 14.

D'autres caractéristiques et avantages de l'invention ressortiront de la description qui en est donnée ci-dessous, à titre indicatif et nullement limitatif, en référence aux figures annexées, parmi lesquelles :
- la figure 1 représente un ensemble d'équipements connectés via un réseau Ethernet ;
- la figure 2 représente un système de communications mettant en oeuvre l'invention, et
- la figure 3 est un synoptique d'un dispositif de type équipement intermédiaire apte à mettre en oeuvre l'invention.

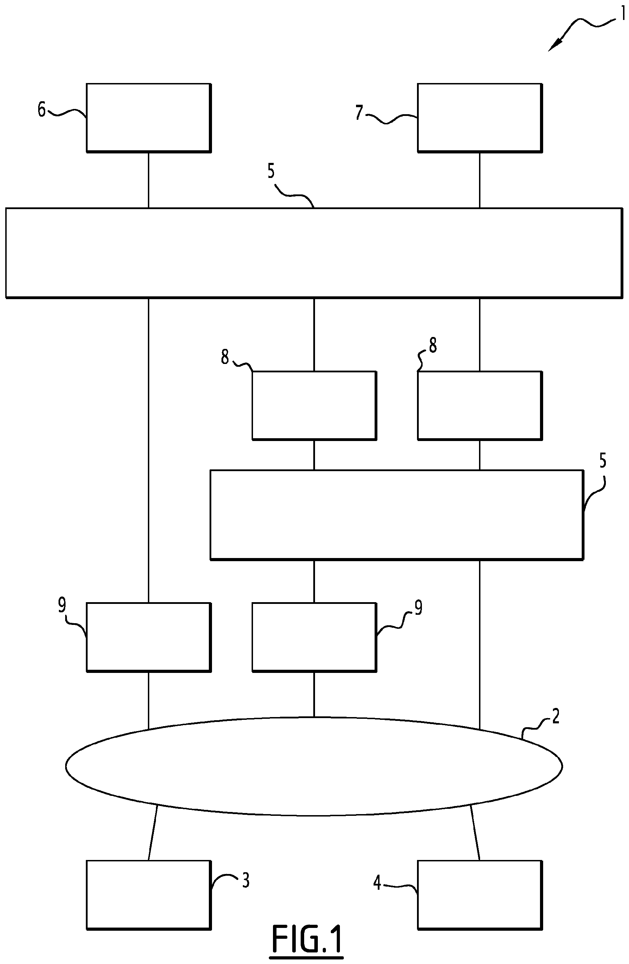

La figure 1 illustre un exemple de système de communications 1 dans lequel l'invention trouve une application. Le système de communications 1 comprend un sous-réseau local 2 auquel sont connectés des équipements terminaux tels qu'un ordinateur 3 et un terminal audio 4, qui fournissent des données série de type V24 ou des signaux analogiques.

Ces signaux sont transmis via des moyens de matriçage 5 à des moyens de communication externe, par exemple des moyens de communication radio 6 et des moyens de communication par satellite 7. Les moyens de matriçage 5 réalisent le matriçage et certains traitements des données utilisateur.

Des moyens supplémentaires de modulation/démodulation BF 8 sont insérés pour assurer la conversion des données utilisateur à transmettre dans le format adéquat supporté par les moyens de transmission et vice versa, des moyens la conversion des données reçues de l'extérieur en format de données utilisateur.

De plus, pour assurer la confidentialité des données, des chiffreurs 9 sont ajoutés dans le système.

Des signaux transportant des données utilisateur, chiffrées ou non chiffrées, sont transmis dans le système de communications 1. La transmission de ces signaux doit garantir une intégrité, y compris sur une longue période, des données transportées. A cet effet, les moyens de matriçage implémentent une fonction de passerelle synchrone comme expliqué plus en détail ci-après, assurant ainsi la transmission synchrone de signaux transportant des données utilisateur numériques sur un réseau Ethernet.

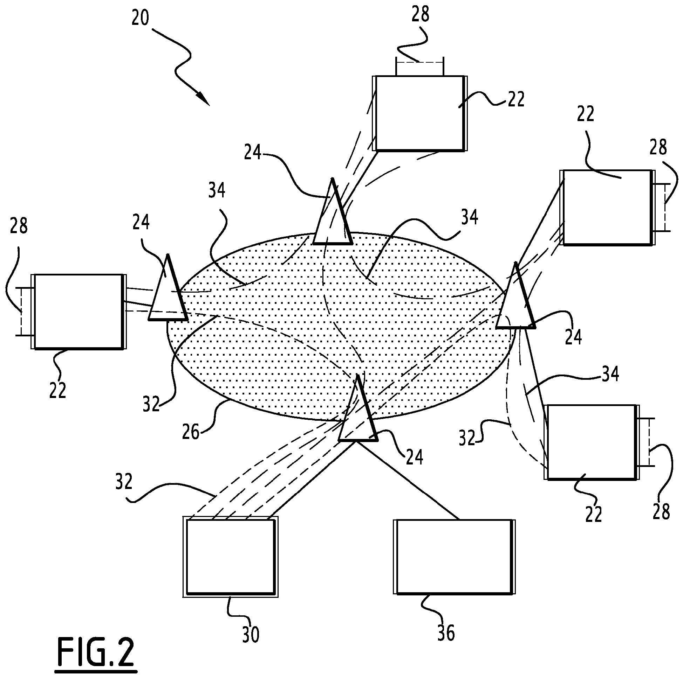

La figure 2 illustre une architecture globale d'un système de communications 20 selon l'invention comprenant une pluralité d'équipements intermédiaires 22 assurant une fonction de passerelle synchrone, connectés à des commutateurs Ethernet 24 connectés au réseau Ethernet 26, via une interface physique d'accès Ethernet non représentée sur cette figure. De plus, chaque équipement intermédiaire 22 est connecté à un ou plusieurs équipements terminaux 28 fournissant des signaux transportant des données utilisateur. Les équipements terminaux fournissent par exemple divers types d'accès utilisateur : accès audio (signaux BF et signaux discrets), liaison série type V24, ISDN (« Integrated Services Device Network »). Les équipements terminaux ne sont pas asservis par une horloge distribuée.

Un équipement intermédiaire au sens de l'invention comprend d'une part des moyens de génération d'horloge locale, et d'autre part des moyens de traitement des signaux transmis, implémentés soit dans un seul bloc matériel, soit dans plusieurs blocs matériels connectés entre eux.

Le système de communications comprend un générateur d'horloge de référence 30, qui génère périodiquement une information de référence temporelle qui est transmise aux divers équipements intermédiaires 22 par un flux de données 32, qui transporte cette information de référence temporelle encapsulée dans des paquets de transport, au niveau réseau ou au niveau liaison du modèle OSI, de la même manière que les autres données, par exemple les données utilisateur, transmises sur le réseau.

Dans un mode de réalisation, l'horloge de référence est synchronisée sur une horloge globale par exemple via le système GPS.

Les données utilisateur numériques sont véhiculées dans des flux 34, également sous forme de paquets de transport au niveau réseau.

Le nombre d'équipements intermédiaires 22 est variable en fonction du nombre d'équipements terminaux 28 à raccorder, du nombre de ports « usager » disponibles sur un équipement intermédiaire 22, ainsi que de la répartition géographique des équipements terminaux. Le nombre d'équipements terminaux 28 connectés à un équipement intermédiaire 22 est variable d'un équipement intermédiaire à l'autre selon les besoins applicatifs.

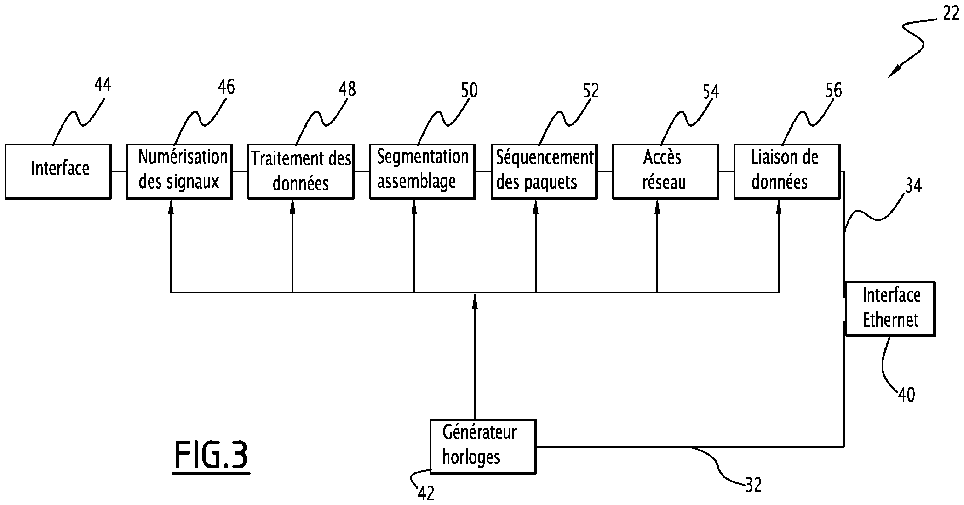

Le système de communications comporte également, de façon optionnelle, un serveur d'administration 36 qui a pour rôle de calculer puis de distribuer aux équipements intermédiaires 22, d'une part les informations identifiant les extrémités des interconnexions à effectuer ou à supprimer, d'autre part les paramètres des configurations des fonctions traitement des signaux, comme décrit plus en détail ci-après en référence à la figure 3.

Dans le mode de réalisation préféré, l'information de référence temporelle est formatée et diffusée selon le protocole « Precision Time Protocol » (PTP) défini par la norme IEEE 1588-V2. Typiquement, l'information de référence temporelle comprend une information de fréquence de l'horloge de référence et une référence de datation.

L'information de référence temporelle est un message de type « Time stamp » selon PTP qui est émis périodiquement, avec une période d'émission allant jusqu'à 128 messages par seconde, ce qui permet d'avoir une gigue résiduelle entre l'horloge de référence et l'horloge locale de quelques dizaines de nanosecondes. Plus généralement, des périodes de transmission de 2ⁿ messages/seconde, avec n variant de 1 à 8 sont envisagées dans PTP.

Le fonctionnement de la diffusion de messages de type « time stamp » pour une synchronisation en mode différentiel selon le protocole PTP est le suivant : un message SYNC comprenant une référence de datation temporelle (t1) de l'heure d'envoi de l'horloge de référence est envoyé, selon le mode « unicast » ou « multicast », sur le réseau et reçu par le générateur d'horloge locale d'un équipement 22 dont l'horloge locale doit être asservie à l'horloge de référence. L'instant de réception t2 est noté par l'équipement 22. Optionnellement, un message de type FOLLOW_UP est renvoyé par l'horloge de référence contenant l'instant précis d'envoi t1 du message précédent. Cela permet à l'équipement 22 de calculer un délai dm2s=t2-t1. Ce délai de transmission entre le générateur de l'horloge de référence 30 et l'équipement 22 comprend le temps de transmission sur le réseau et le décalage ou offset entre les deux horloges.

L'équipement 22 envoie ensuite une requête de demande de délai DELAY_REQ à un instant t3, et note cet instant t3. Le générateur d'horloge de référence reçoit ce message DELAY_REQ à un instant t4 et envoie la valeur t4 dans un message réponse DELAY_RESP qui est reçu par l'équipement 22 qui peut ainsi calculer le délai ds2m=t4-t3.

Le décalage entre les horloges ou offset est alors calculé par : *off*=(dm2s-ds2m)/2, en supposant que le temps de transmission des messages est symétrique entre les équipements.

L'horloge locale applique ensuite la différence off calculée pour corriger son éventuel décalage par rapport à l'horloge de référence, et devient ainsi asservie à l'horloge de référence.

Avantageusement, la diffusion de messages de type « time stamp » de PTP est faite au niveau de la couche liaison ou de la couche réseau, et les messages sont directement traités par le hardware, donc au niveau de la couche physique, donc la transmission et le traitement sont effectuées de manière très rapide, garantissant ainsi une gigue de l'horloge locale inférieure à 50 nanosecondes (ns). Grâce à ce système de synchronisation d'horloges locales, tous les équipements intermédiaires 22 appliquent l'asservissement de leur horloge locale, ce qui permet d'avoir une synchronisation complète dans le système de communications 20. Ainsi, les flux de données utilisateur numériques 34 sont transmis, selon le mode « unicast », à destination d'un équipement intermédiaire ou dupliqués puis transmis, selon le mode « unicast », à destination de plusieurs équipements intermédiaires, réalisant ainsi une transmission point-multipoint.

Les commutateurs Ethernet 24 n'ont pas besoin d'implémenter le protocole PTP, dans la mesure où le flux de données 32 transportant l'information temporelle de référence a le même format qu'un autre flux de données utilisateur numériques 34. Dans ce cas, le traitement est particulièrement simple au niveau des commutateurs Ethernet 24.

Dans une variante, les commutateurs Ethernet 24 implémentent également le protocole PTP et corrigent le retard qu'ils introduisent. Chaque commutateur Ethernet 24 calcule son temps de traversée des messages « Time stamp » et ajoute aux messages réémis ce délai dans un champ spécifique. Cette information est alors utilisée par les équipements intermédiaires 22 pour corriger leur calcul d'offset du temps de traversée variable des commutateurs Ethernet 24.

En variante, le système de communications 20 comporte plusieurs équipements se comportant comme générateur d'horloge de référence. Dans ce cas, une note de qualité est attribuée à chaque générateur. Le système exploite l'horloge disponible qui offre la meilleure qualité. Par ailleurs la ou les fonctions de générateurs d'horloge de référence sont intégrées aux équipements intermédiaires qui peuvent, selon la configuration, être émetteurs ou récepteurs de l'horloge de référence.

La figure 3 illustre un exemple d'équipement intermédiaire 22 ou passerelle synchrone selon l'invention.

Un tel équipement intermédiaire 22 comporte une interface physique d'accès Ethernet 40 qui transmet le flux d'information temporelle de référence 32 vers un générateur d'horloge local 42, et échange le flux de données utilisateur numériques 34 avec les autres modules qui implémentent des moyens de traitement des données de l'équipement intermédiaire 22. La différentiation entre le flux d'information temporelle et le flux de données utilisateur numériques se fait au niveau des entêtes de paquets. Selon le choix d'implémentation, cette différentiation est soit au niveau de l'adresse MAC (« Medium Access Control »), soit au niveau de l'adresse IP (« Internet Protocol »), soit au niveau du port UDP (« User Datagram Protocol »).

Comme expliqué précédemment en référence à la figure 2, le générateur d'horloge local 42 traite l'information temporelle de référence pour corriger sa différence par rapport à l'horloge de référence, et transmet cette horloge locale à tous les autres moyens de traitement, de manière à cadencer leurs traitements aux niveaux du hardware et à les rendre synchrones en fréquence par rapport au générateur d'horloge de référence, ce qui assure le traitement synchrone des signaux transportant les données utilisateur.

Pour le traitement des signaux transportant des données utilisateur l'équipement 22 comporte au moins une interface 44 d'adaptation aux contraintes électriques de ces signaux utilisateur.

L'équipement 22 comporte en outre des moyens de numérisation 46 assurant la caractérisation des signaux utilisateurs, adaptée à la nature des ces derniers, afin de les régénérer avec les mêmes caractéristiques de fréquence et d'amplitude sur l'équipement intermédiaire de l'autre(s) extrémité(s). Dans le cas de signaux analogiques les moyens de numérisation 46 assurent la conversion analogique-numérique et numérique-analogique, pour convertir les signaux utilisateur transportant des données utilisateur analogiques en données utilisateur numériques, et vice-versa. Dans le cas de données synchrones, par exemple pour une liaison série de type V24, les moyens de numérisation 46 assurent l'échantillonnage des données et la mesure de phase et de fréquence des signaux d'horloge, ou inversement la régénération de la fréquence des signaux d'horloge.

L'équipement 22 comporte également des moyens de traitement 48 des données utilisateur numériques, permettant l'interconnexion d'équipements terminaux ne présentant pas les mêmes signaux sur leur interface, par exemple émulation de signaux, multiplexage de signaux, ou le mixage des données dans le cas d'accès usager nécessitant le traitement de données issues de plusieurs équipements intermédiaires contribuant à la transmission multipoint-point ou multipoint-multipoint.

De plus, l'équipement 22 comporte des moyens de formatage/dé-formatage 50, qui assurent le formatage de données utilisateur numériques en paquets de transport de données numériques séquencés et aptes à être transmis sur le réseau Ethernet. Par exemple, les données d'un même port utilisateur sont multiplexées dans un datagramme au format RTP. Les moyens de formatage/dé-formatage assurent optionnellement également une fonction de supervision, permettant de s'assurer que les flux traités en réception sont bien ceux de la connexion demandée. A cet effet, au niveau du formatage, une information identifiant l'équipement récepteur est insérée dans les paquets de données numériques. Un tel identifiant est unique dans le système à un instant donné, et est fourni par exemple par le serveur d'administration 36. Au niveau du dé-formatage, l'identifiant est vérifié et les données sont traitées uniquement en cas de vérification positive. Dans le cas contraire, les données sont détruites. Cette fonction permet d'augmenter la sécurité de la transmission des signaux utilisateur.

En outre, l'équipement 22 comporte des moyens de séquencement 52 des paquets de transport des données et des moyens d'accès réseau 54, qui assurent l'implémentation de la couche réseau.

L'équipement 22 comporte également des moyens de liaison de données 56 qui assurent l'implémentation de la couche protocolaire correspondante, ou couche MAC. Les moyens de liaison 56 traitent les flux de données utilisateur numériques 34 reçus et à envoyer via le module d'accès physique Ethernet 40.

Dans un premier mode de réalisation, l'équipement intermédiaire 22 est un dispositif comportant de manière intégrée, le générateur d'horloge 42 et l'ensemble des modules de traitement 44 à 56.

Dans un mode de réalisation alternatif, l'équipement intermédiaire 22 est constitué de plusieurs blocs matériels interconnectés, d'une part un bloc implémentant le générateur d'horloge 42 et d'autre part un ou plusieurs bloc(s) implémentant les modules de traitement 44 à 56.

Tous les moyens de traitement 46 à 56 sont rythmés par le générateur d'horloge local 42, qui applique la correction en mode différentiel pour être asservi en fréquence au générateur d'horloge de référence.

Par exemple, lorsque les données utilisateur sont des signaux audio, les moyens de numérisation 46 sont pilotés de manière synchrone avec l'horloge de référence.

Ainsi, le système de communications permet la transmission synchrone de signaux transportant des données utilisateur entre des équipements terminaux non asservis par une horloge distribuée, via des équipements intermédiaires connectés à un réseau Ethernet.

## Revendications

1. Système de communications (20) permettant la transmission de signaux entre des équipements terminaux (28) raccordés à des équipements intermédiaires (22), reliés à un réseau de communications (26) utilisant le protocole Ethernet, lesdits équipements terminaux (28) n'étant pas asservis par une horloge distribuée, lesdits équipements intermédiaires (22) comportant chacun au moins une interface physique (40) d'accès Ethernet, au moins une interface (44) avec un équipement terminal et des moyens de traitement (46-56) des signaux transmis, le système de communications (20) comportant au moins un générateur d'horloge de référence (30), **caractérisé en ce qu'**il comprend les équipements intermédiaires (22), ces derniers assurant une fonction de passerelle synchrone, et **en ce que** le système est configuré de sorte que :
- une information de référence temporelle est émise périodiquement par le générateur d'horloge de référence (30) et distribuée sous forme de paquets de transport de données aux équipements intermédiaires (22) via l'interface physique (40) d'accès Ethernet,
- chaque équipement intermédiaire (22) comporte un générateur d'horloge local (42), ladite information de référence temporelle étant reçue et traitée par chaque équipement intermédiaire (22), de manière à asservir le générateur d'horloge local (42) de chaque équipement intermédiaire (22) sur l'horloge de référence (30), permettant d'acquérir une synchronisation entre équipements intermédiaires (22),
- les moyens de traitement (46-56) des signaux d'un premier des équipements intermédiaires (22) comportent des moyens de numérisation (46) de signaux fournis par un équipement terminal (28) raccordé audit premier des équipements intermédiaires (22) sous forme de paquets de transport de données utilisateur, lesdits moyens de traitement étant cadencés par le générateur d'horloge local (42) dudit premier des équipements intermédiaires,
- lesdits paquets de transport de données utilisateur étant transmis sous forme de flux de données utilisateur numériques (34) via le réseau Ethernet (26) à un deuxième des équipements intermédiaires,
- des signaux étant restitués à un équipement terminal (28) dudit deuxième des équipements intermédiaires (22), lesdits signaux étant régénérés à partir du flux de données utilisateur numériques (34) avec les mêmes caractéristiques de fréquence et d'amplitude par les moyens de numérisation (46) du deuxième des équipements intermédiaires cadencés par le générateur d'horloge local (42) dudit deuxième des équipements intermédiaires,
permettant ainsi d'obtenir un traitement synchrone des signaux transmis.

2. Système de communications selon la revendication 1, **caractérisé en ce que** le traitement de l'information de référence temporelle comprend un calcul de la différence entre l'horloge locale et l'horloge de référence, et une modification de l'horloge locale le cas échéant en fonction de la différence calculée.

3. Système de communications selon l'une des revendications 1 à 2, **caractérisé en ce que** les moyens de traitement (46-56) des données d'un équipement intermédiaire comportent :
- des moyens de formatage (50) de données utilisateur numériques provenant de la numérisation des signaux (46), en paquets de transport de données numériques séquencés et aptes à être transmis sur le réseau Ethernet, et
- des moyens de dé-formatage (50) des paquets de transport de données numériques, en données utilisateur numériques aptes à être fournies à la génération des signaux (46) destinés à un équipement terminal.

4. Système de communications selon l'une quelconque des revendications précédentes, **caractérisé en ce que** ladite information de référence temporelle est formatée et distribuée selon le protocole « Précision Time Protocol » défini par la norme IEEE 1588-V2.

5. Système de communications selon la revendication 4, **caractérisé en ce que** ladite information de référence temporelle comprend une information de fréquence de l'horloge de référence et une référence de datation.

6. Système de communication selon l'une des revendications 4 ou 5, **caractérisé en ce que** ladite information de référence temporelle est diffusée au niveau de la couche liaison ou de la couche réseau du protocole de communication du réseau Ethernet (26), et **en ce que** l'information de référence temporelle est traitée au niveau matériel d'un équipement intermédiaire (22).

7. Système de communication selon l'une quelconque des revendications précédentes, **caractérisé en ce que** le générateur d'horloge de référence (30) est synchronisé sur une horloge globale de type GPS.

8. Système de communication selon l'une quelconque des revendications précédentes, **caractérisé en ce qu'**il comporte plusieurs générateurs d'horloge de référence, une note étant attribuée à chaque générateur d'horloge de référence.

9. Système de communication selon la revendication 8, **caractérisé en ce que** des équipements intermédiaires intègrent chacun un générateur d'horloge de référence, un équipement intermédiaire étant adapté à être configuré pour être émetteur ou récepteur d'horloge de référence.

10. Système de communication selon l'une quelconque des revendications précédentes, **caractérisé en ce que** les moyens de traitement des signaux d'un équipement intermédiaire (22) comportent des moyens de formatage/dé-formatage (50), qui assurent le formatage de données utilisateur numériques en paquets de transport de données numériques en effectuant un multiplexage de signaux.

11. Système de communication selon la revendication 10, **caractérisé en ce que** ledit formatage est effectué selon le format RTP.

12. Système de communications selon l'une quelconque des revendications précédentes, comprenant en outre des commutateurs (24) aptes à transférer des paquets de transport de données numériques en mode asynchrone, entre divers équipements du réseau de communications (26), **caractérisé en ce que** ladite information de référence temporelle est transportée dans un paquet de transport de données transféré sans traitement particulier par un dit commutateur (24).

13. Dispositif de type équipement intermédiaire apte à être relié à un réseau de communications (26) utilisant le protocole Ethernet, via au moins une interface physique d'accès Ethernet (40), comportant au moins une interface (44) apte à échanger des signaux avec au moins un équipement terminal (28), et des moyens de traitement (46-56) de signaux échangés avec ledit au moins un équipement terminal (28) et transmis via le réseau de communications, **caractérisé en ce qu'**il comporte :
un générateur d'horloge local (42), apte à traiter une information de référence temporelle reçue sous forme de paquets de transport de données via ladite interface physique d'accès Ethernet, de manière à asservir ledit générateur d'horloge local sur une horloge de référence,
le générateur d'horloge local étant apte à cadencer lesdits moyens de traitement de signaux, permettant ainsi d'obtenir un traitement synchrone des signaux transmis,
les moyens de traitement (46-56) des signaux permettant la numérisation (46) de signaux fournis par l'équipement terminal, permettant la caractérisation desdits signaux afin de les régénérer avec les mêmes caractéristiques de fréquence et d'amplitude par des moyens de numérisation (46) d'un autre équipement intermédiaire (22).

14. Dispositif de type équipement intermédiaire selon la revendication 13, **caractérisé en ce que** le générateur d'horloge local comprend des moyens de calcul de la différence entre l'horloge locale et l'horloge de référence, et des moyens de modification de l'horloge locale le cas échéant en fonction de la différence calculée.

## Patentansprüche

1. Kommunikationssystem (20), das die Übertragung von Signalen zwischen Endgeräten (28) ermöglicht, die an Zwischengeräte (22) angeschlossen sind, wobei die Geräte zu einem Kommunikationsnetz (26) zusammengeschlossen sind, das das Ethernet-Protokoll verwendet, , wobei die Endgeräte (28) nicht von einem verteilten Takt gesteuert sind, wobei die Zwischengeräte (22) jeweils mindestens eine physikalische Schnittstelle für den Ethernet-Zugang, mindestens eine Schnittstelle (44) mit einem Endgerät und Mittel (46-56) zur Verarbeitung der übertragenen Signale aufweisen, wobei das Kommunikationssystem (20) mindestens einen Taktgenerator (30) aufweist, **dadurch gekennzeichnet, dass** es die Zwischengeräte (22) umfasst, wobei letztere eine synchrone Gateway-Funktion sicherstellen, und dass das System derart konfiguriert ist, dass:
- eine Zeitreferenzinformation periodisch von dem Referenztaktgenerator (30) gesendet wird und in Form von Paketen zum Transport von Daten über die physikalische Schnittstelle (40) für den Ethernet-zugang an die Zwischengeräte (22) verteilt wird,
- jedes Zwischengerät (22) einen lokalen Taktgenerator (42) aufweist, wobei die Zeitreferenzinformation von jedem Zwischengerät (22) empfangen und derart behandelt wird, dass der lokale Taktgenerator (42) jedes Zwischengeräts (22) auf den Referenztakt (30) gesteuert wird, wodurch eine Synchronisation zwischen den Zwischengeräten (22) erlangt werden kann,
- die Mittel (46 - 56) zur Verarbeitung der Signale eines ersten Zwischengeräts (22) Mittel (46) zur Digitalisierung von Signalen aufweisen, die von einem an das erste Zwischengerät (22) angeschlossene Endgerät (28) in Form von Paketen zum Transport von Benutzerdaten geliefert werden, wobei die Verarbeitungsmittel von dem lokalen Taktgenerator (42) des ersten Zwischengeräts getaktet werden,
- die Pakete zum Transport von Benutzerdaten in Form eines digitalen Benutzerdatenstroms (34) über das Ethernet-Netz (26) an ein zweites Zwischengerät gesendet werden,
- die Signale an ein Endgerät (28) des zweiten Zwischengeräts (22) zurückgegeben werden, wobei die Signale aus dem digitalen Benutzerdatenstrom (34) durch die Digitalisierungsmittel (46) des zweiten Zwischengeräts, das von dem lokalen Taktgenerator (42) des zweiten Zwischengeräts getaktet wird, mit denselben Frequenz- und Amplitudeneigenschaften rückgewonnen werden,
wodurch eine synchrone Verarbeitung der übertragenen Daten ermöglicht wird.

2. Kommunikationssystem nach Anspruch 1, **dadurch gekennzeichnet, dass** die Verarbeitung der Zeitreferenzinformation eine Berechnung der Differenz zwischen dem lokalen Takt und dem Referenztakt und gegebenenfalls eine Modifikation des lokalen Takts abhängig von der berechneten Differenz umfasst.

3. Kommunikationssystem nach einem der Ansprüche 1 bis 2, **dadurch gekennzeichnet, dass** die Mittel (46 - 56) zur Verarbeitung der Daten eines Zwischengeräts umfassen:
- Mittel (50) zur Formatierung von numerischen Benutzerdaten, die von der Digitalisierung der Signale (46) stammen, in aufeinanderfolgende Pakete des Transports von numerischen Daten, die geeignet sind, über das Ethernet-Netz übertragen zu werden, und
- Mittel (50) zur De-Formatierung der Pakete zum Transport von numerischen Daten in numerische Benutzerdaten, die geeignet sind, an die Erzeugung von für ein Endgerät vorgesehenen Signalen (46) geliefert zu werden.

4. Kommunikationssystem nach einem beliebigen der vorhergehenden Ansprüche, **dadurch gekennzeichnet, dass** die Zeitreferenzinformation gemäß dem Protokoll "Precision Time Protocol", das durch die Norm IEEE 1588-V2 definiert ist, formatiert und verteilt wird.

5. Kommunikationssystem nach Anspruch 4, **dadurch gekennzeichnet, dass** die Zeitreferenzinformation eine Frequenzinformation des Referenztakts und eine Datierungsreferenz umfasst.

6. Kommunikationssystem nach einem der Ansprüche 4 oder 5, **dadurch gekennzeichnet, dass** die Zeitreferenzinformation auf Ebene der Verbindungsschicht oder der Netzwerkschicht des Kommunikationsprotokolls des Ethernet-Netzes (26) verbreitet wird und dass die Zeitreferenzinformation auf Ebene der Materialschicht eines Zwischengeräts (22) verarbeitet wird.

7. Kommunikationssystem nach einem beliebigen der vorhergehenden Ansprüche, **dadurch gekennzeichnet, dass** der Referenztaktgenerator (30) mit einem globalen GPS-Takt synchronisiert ist.

8. Kommunikationssystem nach einem beliebigen der vorhergehenden Ansprüche, **dadurch gekennzeichnet, dass** es mehrere Referenztaktgeneratoren aufweist, wobei ein Hinweis jedem Referenztaktgenerator zugeordnet ist.

9. Kommunikationssystem nach Anspruch 8, **dadurch gekennzeichnet, dass** die Zwischengeräte jeweils einen Referenztaktgenerator einschließen, wobei das Zwischengerät angepasst ist, als Referenztaktsender oder-empfänger konfiguriert zu werden.

10. Kommunikationssystem nach einem beliebigen der vorhergehenden Ansprüche, **dadurch gekennzeichnet, dass** die Verarbeitungsmittel der Signale eines Zwischengeräts (22) Mittel (50) zur Formatierung/De-Formatierung aufweisen, die die Formatierung von numerischen Benutzerdaten in Pakete zum Transport von numerischen Daten sicherstellen, indem ein Multiplexierung der Signale durchgeführt wird.

11. Kommunikationssystem nach Anspruch 10, **dadurch gekennzeichnet, dass** die Formatierung gemäß dem Format RTP durchgeführt wird.

12. Kommunikationssystem nach einem beliebigen der vorhergehenden Ansprüche, außerdem Switches (24) umfassend, die geeignet sind, Pakete zum Transport von numerischen Daten asynchron zwischen verschiedenen Geräten des Kommunikationsnetzes (26) zu übertragen, **dadurch gekennzeichnet, dass** die Zeitreferenzinformation in einem Paket zum Transport von Daten von einem genannten Switch (24) ohne besondere Bearbeitung übertragen wird.

13. Vorrichtung der Art eines Zwischengeräts, die geeignet ist, an ein das Ethernet-Protokoll verwendendes Kommunikationsnetz (26) über mindestens eine physikalische Schnittstelle (40) für den Ethernet-Zugang angeschlossen zu werden, und die mindestens eine für den Austausch von Signalen mit mindestens einem Endgerät (28) geeignete Schnittstelle (44) und Mittel (46 - 56) zur Verarbeitung von Signalen umfasst, die mit dem mindestens einen Endgerät (28) ausgetauscht werden und über das Kommunikationsnetz übertragen werden, **dadurch gekennzeichnet, dass** sie umfasst:
einen lokalen Taktgenerator (42), der geeignet ist, eine Zeitreferenzinformation, die in Form von Paketen zum Transport von Daten über die physikalische Schnittstelle für einen Ethernet-Zugang empfangen wird, derart zu verarbeiten, dass der lokale Taktgenerator auf einen Referenztakt gesteuert wird,
wobei der lokale Taktgenerator geeignet ist, die Mittel zur Signalverarbeitung zu takten, um so eine synchrone Bearbeitung der übertragenen Signale zu ermöglichen,
wobei die Mittel (46 - 56) zur Verarbeitung der Signale die Digitalisierung (46) der von dem Endgerät gelieferten Signale ermöglichen, wobei die Charakterisierung der Signale ermöglicht wird, damit sie mit denselben Frequenz- und Amplitudeneigenschaften durch die Digitalisierungsmittel (46) eines anderen Zwischengeräts (22) wiedergewonnen werden.

14. Vorrichtung der Art eines Zwischengeräts nach Anspruch 13, **dadurch gekennzeichnet, dass** der lokale Taktgenerator Mittel zum Berechnen der Differenz zwischen dem lokalen Takt und dem Referenztakt und gegebenenfalls Mittel zur Modifikation des lokalen Takts abhängig von der berechneten Differenz umfasst.

## Claims

1. A communications system (20) allowing the transmission of signals between pieces of terminal equipment (28) connected to pieces of intermediate equipment (22), connected to a communications network (26) using the Ethernet protocol, said pieces of terminal equipment (28) not being master-controlled by a distributed clock, said pieces of intermediate equipment (22) each including at least one Ethernet access physical interface (40), at least one interface (44) with a piece of terminal equipment and means (46-56) for processing the transmitted signals, the communications system (20) including at least one reference clock generator (30), **characterized in that** it comprises the pieces of intermediate equipment (22), these latter implementing a synchronous gate function, and **in that** the system is configured so that:
- a piece of reference time information is periodically transmitted by the reference clock generator (30) and distributed as data transport packets to the pieces of intermediate equipment (22) via the Ethernet access physical interface (40),
- each piece of intermediate equipment (22) includes a local clock generator (42) said piece of reference time information being received and processed by each piece of intermediate equipment (22), so as to subordinate the local clock generator (42) of each piece of intermediate equipment (22) to the reference clock (30), so as to achieve synchronizing of the pieces of intermediate equipment (22),
the means (46-56) for processing the signals of a first piece of the pieces of intermediate equipment (22) comprise means (46) for digitizing signals provided by a piece of terminal equipment (28) connected to said first piece of the pieces of intermediate equipment (22) in the form of user data transport packets, said processing means being clocked by the local clock generator (42) of the first piece of the pieces of intermediate equipment,
- said user data transport packets being transmitted as digital user data flows (34) via the Ethernet network (26) to a second piece of the pieces of intermediate equipment,
- signals being restituted to a piece of terminal equipment (28) of said second piece of the pieces of intermediate equipment (22), said signals being regenerated from the digital user data flows (34) with the same frequency and amplitude characteristics by the digitizing means (46) of the second piece of the pieces of intermediate equipment clocked by the local clock generator (42) of said second piece of the pieces of intermediate equipment, so as to obtain a synchronous processing of the transmitted signals.

2. The communications system according to claim 1, **characterized in that** the processing of the piece of reference time information comprises a calculation of the difference between the local clock and the reference clock, and a modification of the local clock if necessary depending on the calculated difference.

3. The communications system according to one of claims 1 or 2, **characterized in that** the means (46-56) for processing data from a piece of intermediate equipment (22) include:
- means (50) for formatting digital user data from the digitization of the user signals (46) into sequenced digital data transport packets and capable of being transmitted over the Ethernet network, and
- means (50) for de-formatting the digital data transport packets into digital user data capable of being provided for generating the user signals (46) intended for a piece of terminal equipment.

4. The communications system according to any of the preceding claims, **characterized in that** said piece of reference time information is formatted and distributed according to the « Precision Time Protocol » defined by the IEEE 1588-V2 standard.

5. The communications system according to claim 4, **characterized in that** said piece of reference time information comprises a piece of frequency information of the reference clock and a date reference.

6. The communications system according to any of claims 4 or 5, **characterized in that** the piece of reference time information is transmitted at the link layer or network layer of the communication protocol, of the Ethernet network (26) and **in that** the piece of reference time information is processed by the hardware of a piece of intermediate equipment (22).

7. The communications system according to any of the preceding claims, **characterized in that** the reference clock generator is synchronized on a global GPS-type clock.

8. The communications system according to any of the preceding claims, **characterized in that** it comprises several reference clock generators, a score being assigned to each of the reference clock generators.

9. The communications system according to claim 8, wherein each piece of intermediate equipment of a plurality of pieces of intermediate equipments integrates a reference clock generator, a piece of intermediate equipment being adapted to be configured as a transmitter of a receiver of the reference clock.

10. The communications system according to any of the preceding claims, **characterized in that** the means for processing signals from a piece of intermediate equipment (22) include formatting/de-formatting means (50), which achieve formatting digital user data into digital data transport packets by applying multiplexing.

11. The communications system according to claim 10, **characterized in that** said formatting is done according to RTP format.

12. The communications system according to any of the preceding claims, further comprising switches (24) able to transfer digital data transport packets in asynchronous mode, between various pieces of equipment of the communications network (26), **characterized in that** said piece of reference time information is transported in a data packets without any particular processing by a said switch (24).

13. A device of the intermediate equipment type connected to a communications network (26) using the Ethernet protocol, via at least one Ethernet access physical interface (40) including at least one interface (44) capable of exchanging signals with at least one piece of terminal equipment (28) and means (46-56) for processing signals exchanged with said at least one piece of terminal equipment (28) and transmitted via the communications network, **characterized in that** it includes:
a local clock generator (42), capable of processing a piece of reference time information received as data transport packets via said Ethernet access physical interface, so as to subordinate said local clock generator to a reference clock,
the local clock generator being capable of clocking said means for processing signals so as to obtain synchronous processing of the transmitted signals,
the means (46-56) for processing signals allowing digitizing (46) of the signals provided by the piece of terminal equipment, allowing characterization of said user signals in order to regenerate them with the same frequency and amplitude characteristics by digitization means (46) of another piece of intermediate equipment (22).

14. The device of the intermediate equipment type according to claim 13, **characterized in that** the local clock generator comprises means for calculating the difference between the local clock and the reference clock and means for modifying the local clock, if necessary, depending on the calculated difference.
